# EUROPEAN PATENT APPLICATION

(11) **EP 4 561 024 A1**
(43) Date of publication of application: **28.05.2025**
(21) Application number: 24213101.9
(22) Date of filing: 14.11.2024
(51) Int. Cl.: H04L 67/52, H04L 67/54, H04W 4/02, H04W 4/90

(54) **EFFICIENT PROXIMITY-BASED ALERTING**

(30) Priority: 21.11.2023 US 202363601679 P; 23.10.2024 US 202418924078
(71) Applicant: The Safe Numbers, Inc., Prospect Kentucky 40059 (US)
(72) Inventor: Onubogu, Ifesi Dimma, Prospect (US); Ernest-Eze, Jachike Munachi, Prospect (US)
(74) Representative: Derry, Paul Stefan

(57) **Abstract**

An example embodiment may involve: determining that a requester device is in a state for a response; based on the requester device being in the state for the response, determining respective values for each of a plurality of potential responder devices, wherein for a particular responder device of the potential responder devices, a particular value is based on a weighted combination of: physical distance between the requester device and the particular responder device, temporal recentness of location updates received from the particular responder device, and similarity of affiliations of the requester device and the particular responder device; determining that the particular value for the particular responder device meets a threshold criterion; and transmitting a notification to the particular responder device indicating that a responder associated with the particular responder device should provide the response to a requester associated with the requester device.

## Description

### CROSS-REFERENCE TO RELATED APPLICATIONS

This application claims priority to U.S. Provisional Patent Application No. 63/601,679 filed November 21, 2023, the content of which is hereby incorporated by reference.

### BACKGROUND

Current emergency response systems, including those based on existing mobile applications, face significant challenges due to overstretched first responder dispatch systems. This can result in response times that are too lengthy to be effective in emergencies. In some urban areas, first responder dispatch delays of over an hour are becoming common, posing a critical risk to individuals in distress. Furthermore, the geographical limitations of emergency phone number infrastructures (like 911 in the United States), coupled with potential communication failures, exacerbate the problem. Additionally, some existing non-governmental systems rely on alerting a distressed user's personal contacts, who often lack the proximity or training to provide an immediate response.

### SUMMARY

The disclosed emergency response service addresses the challenges identified in existing systems, and possibly other drawbacks in these or related systems, by introducing a multi-faceted approach that combines real-time check-ins with a flexible proximity-based response mechanism. The service involves in three modes: account creation, check-in, and search.

The service includes an account creation mode in which a user provides their identifying information such as their name, date of birth, contact details, and possibly additional identity-related specifics. The service validates this information and creates account records for the user in a database, which may also include various user preferences and configuration settings. The user may download a dedicated application ("app") to their personal client device (e.g., mobile phone or wearable computing device) as part of this process. In some embodiments, a user may access the service through an integration of the service with an app that provides a different but related service.

Once the user is registered with the system in this fashion, the user may employ a check-in mode of the application to engage with the emergency response service. For example, the user may be going for a walk, out late at night, or generally feel unsafe. In some cases, the service may be used by elderly or young users so that their locations and safety can be tracked by family members, friends, and/or other services.

During check-in mode, the service sends periodic notifications to the user's client device, each prompting the user to respond. If the service fails to receive a positive response from the user, perhaps after a small number of notification attempts, the service enters search mode for the user. By entering search mode, the service assumes that the user is in need of assistance. Search mode may also be triggered by a proactive request from a user.

In search mode, the service attempts to locate nearby, pre-screened responders who might be able to assist the user. These responders have also downloaded or otherwise obtained the application or a variation thereof on their client devices. The service may compute values for potential responders based on factors such as their proximity to the user, recentness of their location updates, their relationship with the user (if any), and/or their organizational affiliations. A queue of potential responder devices is created, and notifications are sent to responder devices with details about the response request. These notified responders can choose to accept or decline the request. Responders who accept the request agree to assist the user and are considered "active." Active responders may take appropriate actions, such as calling emergency services, finding or otherwise moving toward the user, and/or recording a video of the user or physically intervening. The service monitors the actions of active responders and terminates the search mode under certain conditions, such as a confirmed emergency call to law enforcement, security, or emergency medical services, and/or confirmed physical intervention. The embodiments herein could also be implemented to identify non-human agents, such as robots or drones, as responders to assist the user.

Overall, this emergency response service introduces a dynamic and intelligent mechanism that leverages real-time data, user preferences, and location-based information to improve the efficiency and effectiveness of emergency responses, addressing the limitations of existing systems. It can be used to provide timely emergency assistance for individuals who are in threatening situations, elderly people who become incapacitated away from their homes, young children who are lost, and possibly other situations in which a user requires or would find assistance desirable.

Accordingly, a first example embodiment may involve a computer-implemented method comprising: determining, by a server device, that a requester device is in a state for a response; based on the requester device being in the state for the response, determining, by the server device, respective values for each of a plurality of potential responder devices, wherein for a particular responder device of the potential responder devices, a particular value is based on a weighted combination of: physical distance between the requester device and the particular responder device, temporal recentness of location updates received from the particular responder device, and similarity of class-based affiliations of the requester device and the particular responder device; determining, by the server device, that the particular value for the particular responder device meets a threshold criterion; and transmitting, by the server device, a notification to the particular responder device indicating that a responder associated with the particular responder device should provide the response to a requester associated with the requester device.

A second example embodiment may involve a non-transitory computer-readable medium, having stored thereon program instructions that, upon execution by a computing system, cause the computing system to perform operations in accordance with the first example embodiment.

In a third example embodiment, a computing system may include at least one processor, as well as memory and program instructions. The program instructions may be stored in the memory, and upon execution by the at least one processor, cause the computing system to perform operations in accordance with the first example embodiment.

In a fourth example embodiment, a system may include various means for carrying out each of the operations of the first example embodiment.

These, as well as other embodiments, aspects, advantages, and alternatives, will become apparent to those of ordinary skill in the art by reading the following detailed description, with reference where appropriate to the accompanying drawings. Further, this summary and other descriptions and figures provided herein are intended to illustrate embodiments by way of example only and, as such, that numerous variations are possible. For instance, structural elements and process steps can be rearranged, combined, distributed, eliminated, or otherwise changed, while remaining within the scope of the embodiments as claimed.

### BRIEF DESCRIPTION OF THE DRAWINGS

Figure 1 illustrates a schematic drawing of a computing device, in accordance with example embodiments.
Figure 2 illustrates a schematic drawing of a server device cluster, in accordance with example embodiments.
Figure 3 illustrates a schematic drawing of a service architecture, in accordance with example embodiments.
Figure 4A is a screenshot of a user interface for account creation, in accordance with example embodiments.
Figure 4B is a flow chart of account creation from the client side, in accordance with example embodiments.
Figure 4C is a flow chart of account creation from the server side in accordance with example embodiments.
Figure 5A illustrates a schematic drawing of a service architecture operating in a check-in mode, in accordance with example embodiments.
Figure 5B is a flow chart of a check-in mode, in accordance with example embodiments.
Figure 6A illustrates a schematic drawing of a service architecture operating in a search mode, in accordance with example embodiments.
Figure 6B is a flow chart of a search mode, in accordance with example embodiments.
Figure 7 is a flow chart in accordance with an example embodiment.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features unless stated as such. Thus, other embodiments can be utilized and other changes can be made without departing from the scope of the subject matter presented herein.

Accordingly, the example embodiments described herein are not meant to be limiting. It will be readily understood that the aspects of the present disclosure, as generally described herein, and illustrated in the figures, can be arranged, substituted, combined, separated, and designed in a wide variety of different configurations. For example, the separation of features into "client" and "server" components may occur in a number of ways.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

### I. Example Computing Devices and Cloud-Based Computing Environments

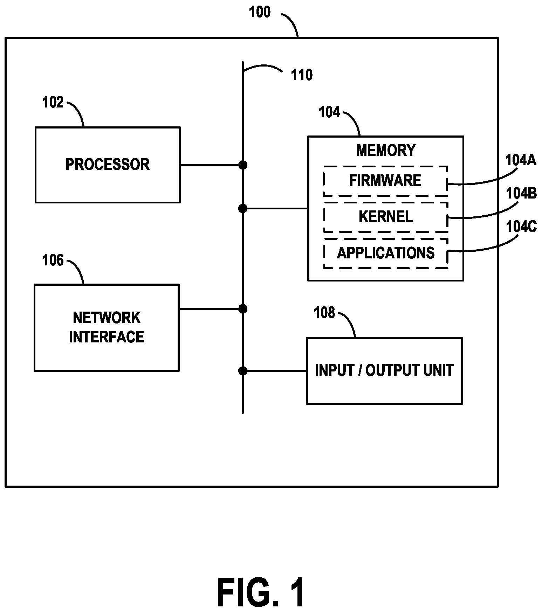

Figure 1 is a simplified block diagram exemplifying a computing device 100, illustrating some of the components that could be included in a computing device arranged to operate in accordance with the embodiments herein. Computing device 100 could be a client device (e.g., a device actively operated by a user), a server device (e.g., a device that provides computational services to client devices), or some other type of computational platform. Some server devices may operate as client devices from time to time in order to perform particular operations, and some client devices may incorporate server features.

In this example, computing device 100 includes processor 102, memory 104, network interface 106, and input / output unit 108, all of which may be coupled by system bus 110 or a similar mechanism. In some embodiments, computing device 100 may include other components and/or peripheral devices (e.g., detachable storage, printers, and so on).

Processor 102 may be one or more of any type of computer processing element, such as a central processing unit (CPU), a co-processor (e.g., a mathematics, graphics, or encryption co-processor), a digital signal processor (DSP), a network processor, and/or a form of integrated circuit or controller that performs processor operations. In some cases, processor 102 may be one or more single-core processors. In other cases, processor 102 may be one or more multi-core processors with multiple independent processing units. Processor 102 may also include register memory for temporarily storing instructions being executed and related data, as well as cache memory for temporarily storing recently used instructions and data.

Memory 104 may be any form of computer-usable memory, including but not limited to random access memory (RAM), read-only memory (ROM), and non-volatile memory (e.g., flash memory, hard disk drives, solid state drives, compact discs (CDs), digital video discs (DVDs), and/or tape storage). Thus, memory 104 represents both main memory units, as well as long-term storage. Other types of memory may include biological memory.

Memory 104 may store program instructions and/or data on which program instructions may operate. By way of example, memory 104 may store these program instructions on a non-transitory, computer-readable medium, such that the instructions are executable by processor 102 to carry out any of the methods, processes, or operations disclosed in this specification or the accompanying drawings.

As shown in Figure 1, memory 104 may include firmware 104A, kernel 104B, and/or applications 104C. Firmware 104A may be program code used to boot or otherwise initiate some or all of computing device 100. Kernel 104B may be an operating system, including modules for memory management, scheduling, and management of processes, input / output, and communication. Kernel 104B may also include device drivers that allow the operating system to communicate with the hardware modules (e.g., memory units, networking interfaces, ports, and buses) of computing device 100. Applications 104C may be one or more user-space software programs, such as web browsers or email clients, as well as any software libraries used by these programs. Memory 104 may also store data used by these and other programs and applications.

Network interface 106 may take the form of one or more wireline interfaces, such as Ethernet (e.g., Fast Ethernet, Gigabit Ethernet, and so on). Network interface 106 may also support communication over one or more non-Ethernet media, such as coaxial cables or power lines, or over wide-area media, such as Synchronous Optical Networking (SONET) or digital subscriber line (DSL) technologies. Network interface 106 may additionally take the form of one or more wireless interfaces, such as IEEE 802.11 (Wifi), BLUETOOTH^{®}, global positioning system (GPS), or a wide-area wireless interface. However, other forms of physical layer interfaces and other types of standard or proprietary communication protocols may be used over network interface 106. Furthermore, network interface 106 may comprise multiple physical interfaces. For instance, some embodiments of computing device 100 may include Ethernet, BLUETOOTH^{®}, and Wifi interfaces.

Input / output unit 108 may facilitate user and peripheral device interaction with computing device 100. Input / output unit 108 may include one or more types of input devices, such as a keyboard, a mouse, a touch screen, and so on. Similarly, input / output unit 108 may include one or more types of output devices, such as a screen, monitor, printer, and/or one or more light emitting diodes (LEDs). Additionally or alternatively, computing device 100 may communicate with other devices using a universal serial bus (USB) or high-definition multimedia interface (HDMI) port interface, for example.

In some embodiments, one or more computing devices like computing device 100 may be deployed as servers in a distributed architecture. The exact physical location, connectivity, and configuration of these computing devices may be unknown and/or unimportant to client devices. Accordingly, the computing devices may be referred to as "cloud-based" devices that may be housed at various remote data center locations.

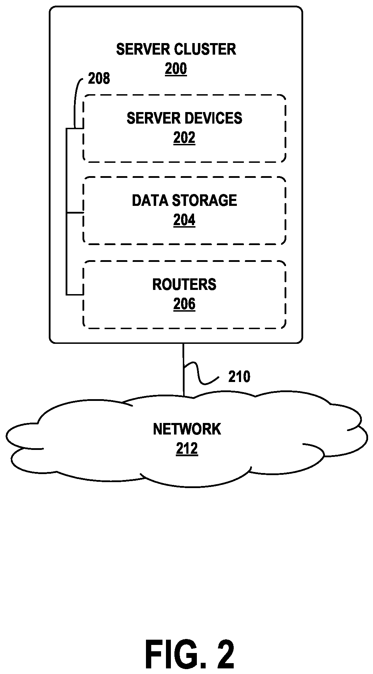

Figure 2 depicts a cloud-based server cluster 200 in accordance with example embodiments. In Figure 2, operations of a computing device (e.g., computing device 100) may be distributed between server devices 202, data storage 204, and routers 206, all of which may be connected by local cluster network 208. The number of server devices 202, data storages 204, and routers 206 in server cluster 200 may depend on the computing task(s) and/or applications assigned to server cluster 200.

For example, server devices 202 can be configured to perform various computing tasks of computing device 100. Thus, computing tasks can be distributed between one and more of server devices 202. To the extent that these computing tasks can be performed in parallel, such a distribution of tasks may reduce the total time to complete these tasks and return a result. For purposes of simplicity, both server cluster 200 and individual server devices 202 may be referred to as a "server device." This nomenclature should be understood to imply that one or more distinct server devices, data storage devices, and cluster routers may be involved in server device operations.

Data storage 204 may be data storage arrays that include drive array controllers configured to manage read and write access to groups of hard disk drives and/or solid state drives. The drive array controllers, alone or in conjunction with server devices 202, may also be configured to manage backup or redundant copies of the data stored in data storage 204 to protect against drive failures or other types of failures that prevent one or more of server devices 202 from accessing units of data storage 204. Other types of memory aside from drives may be used.

Routers 206 may include networking equipment configured to provide internal and external communications for server cluster 200. For example, routers 206 may include one or more packet switching and/or routing devices (including switches and/or gateways) configured to provide (i) network communications between server devices 202 and data storage 204 via local cluster network 208, and/or (ii) network communications between server cluster 200 and other devices via communication link 210 to network 212.

Additionally, the configuration of routers 206 can be based at least in part on the data communication requirements of server devices 202 and data storage 204, the latency and throughput of the local cluster network 208, the latency, throughput, and cost of communication link 210, and/or other factors that may contribute to the cost, speed, fault-tolerance, resiliency, efficiency, and/or other design goals of the system architecture.

As a possible example, data storage 204 may include any form of database, such as a structured query language (SQL) database. Various types of data structures may store the information in such a database, including but not limited to tables, arrays, lists, trees, and tuples. Furthermore, any databases in data storage 204 may be monolithic or distributed across multiple physical devices.

Server devices 202 may be configured to transmit data to and receive data from data storage 204. This transmission and retrieval may take the form of SQL queries or other types of database queries, and the output of such queries, respectively. Additional text, images, video, and/or audio may be included as well. Furthermore, server devices 202 may organize the received data into web page or web application representations. Such a representation may take the form of a markup language, such as HTML, the eXtensible Markup Language (XML), JavaScript Object Notation (JSON), or some other standardized or proprietary format. Moreover, server devices 202 may have the capability of executing various types of computerized scripting languages, such as but not limited to Perl, Python, PHP Hypertext Preprocessor (PHP), Active Server Pages (ASP), JAVASCRIPT^{®}, and so on. Computer program code written in these languages may facilitate the providing of web pages to client devices, as well as client device interaction with the web pages. Alternatively or additionally, JAVA^{®} may be used to facilitate generation of web pages and/or to provide web application functionality.

### II. Proximity-Based Alerting Service

The present disclosure provides solutions to the challenges identified in existing emergency response systems, as well as other possible challenges. Current emergency-response systems face issues related to lack of proximity-based responses, and inefficiencies in utilizing real-time data streams. The service disclosed herein addresses these concerns with a multi-faceted approach, combining real-time check-ins with a more flexible proximity-based response mechanism.

Users may benefit from this service due to its unique combination of real-time check-ins and a dynamic proximity-based response mechanism. It integrates into everyday life, making it easy to use. It may be particularly valuable to users in situations where a timely response is crucial, such as during emergencies or hazardous conditions, offering efficient resource allocation and user customization for enhanced safety and peace of mind.

The service may be able to locate assistance for users in situations where established governmental or private police, security, or medical services are unavailable or unlikely to respond in a rapid fashion. In doing so, the service may take advantage of a number of pre-screened and/or trained citizen responders who volunteer to assist users in need. This increases the likelihood that the user will receive the assistance they need in a timely fashion.

Nonetheless, the service is drawn to client device and server device interactions that underlie its use. Thus, the service may be used by way of one or more applications that are downloaded to users' and responders' client devices as well as cloud-based server devices that utilize location-based information reported by these client device to provide the service in an efficient fashion.

Herein, users requesting assistance may be referred to as "requesters" and their client devices may be referred to as "request devices." Users agreeing to provide assistance in the form of a response may be referred "responders" and their client devices may be referred to as "responder devices."

The service includes an account creation step, where a user creates an account via a client device, and the account is stored in a database. Both requesters and responders may create such accounts. The system may allow users to act as either requests or responders based on circumstances (e.g., a user can be a requester in one scenarios and a responder in another). In embodiments where a responder device is not a user device (e.g., a drone or other automated device or system), such a device may be represented in the service via an indicator rather than an account.

A check-in mode of the service may be initiated by a requester from a respective requester device with some specified parameters (e.g., check-in frequency, time to respond). This mode involves notifications from the service checking in on the requester device, which may require receipt of a positive response or input from the requester into the requester device.

The search mode of the service may be initiated by a failure to receive a positive response from a requester device while in check-in mode, or a proactive request for assistance from a requester device. In this mode, the service runs an algorithm to dynamically value and queue other client devices to become potential responder devices and/or active responder devices (whose associated users are defined as "potential responders" and "active responders"). The active responders may choose from multiple responding actions and/or confirm the response through the service.

The value computation evaluates appropriateness for response by examining a weighted blend of factors such as geographic proximity, the timeliness of location updates, any relationships between the requester and respective potential responders, as well as organizational memberships or relationships of the users (e.g., when they are students, faculty or staff of an educational institution, whether they are employed by a particular business or governmental entity, and so on). More or fewer factors may be used.

### A. Service Architecture

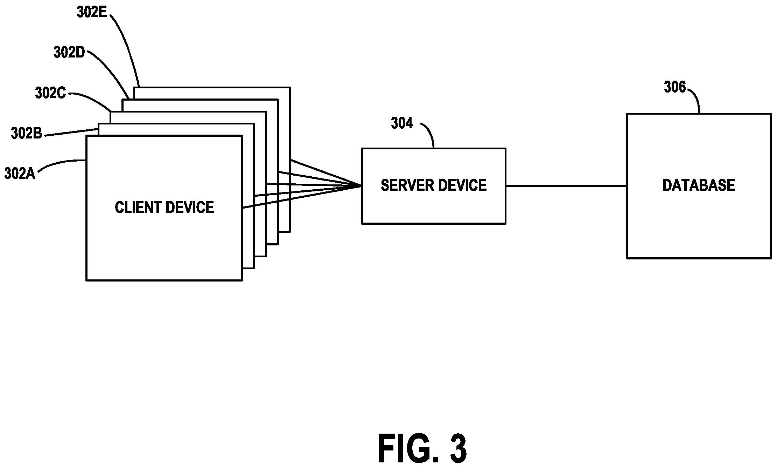

Figure 3 is a schematic representation of a possible service architecture, including client device 302A, 302B, 302C, 302D, and 302E ("the client devices"), as well as server device 304 and database 306. Even though five client devices are shown in Figure 3, there could be more or fewer client devices in various embodiments. Some embodiments contemplate hundreds or thousands of such devices.

Each of the client devices, for example client device 302A, may be based on computing device 100 described in the context of Figure 1. Thus, each could be a mobile phone, tablet, smart watch, personal computer, wearable computing device, or some other type of client device. The client devices could all be of the same type (e.g., all mobile phones), or the client devices may be of multiple types.

Server device 304 may be based on computing device 100 described in the context of Figure 1, server cluster 200 described in the context of Figure 2, or some other arrangement of hardware and software. Thus, it may be a cloud-based server device, a physical server device, or a virtual server device. In some embodiments, the server device 304 may be another client device or another type of computing system. Other possibilities exist.

The client devices may be communicatively coupled to server device 304 via one or more communication links. These links may involve wired and/or wireless network connections. For example, the client devices may be mobile devices coupled to a wireless network (e.g., a Wifi, 4G, or 5G network) and their communications with server device 304 may flow through this wireless network as well as one or more wired networks. Thus, communication between the client devices and server device 304 may traverse private networks and/or the public Internet. There may be one or more of the client devices simultaneously in communication with server device 304.

Database 306 may be a relational database based on the structured query language (SQL), a NoSQL database with flexible schema properties (e.g., MongoDB), a hierarchical database, a graph database, key-value storage, or some other form of database. Database 306 may be integrated with server device 304, or it may be communicatively coupled to server device 304 in some fashion (e.g., one or more wireless or wired network links). Further, database 306 may include multiple physical, logical, or virtual databases.

### B. Client Device Registration and Account Creation

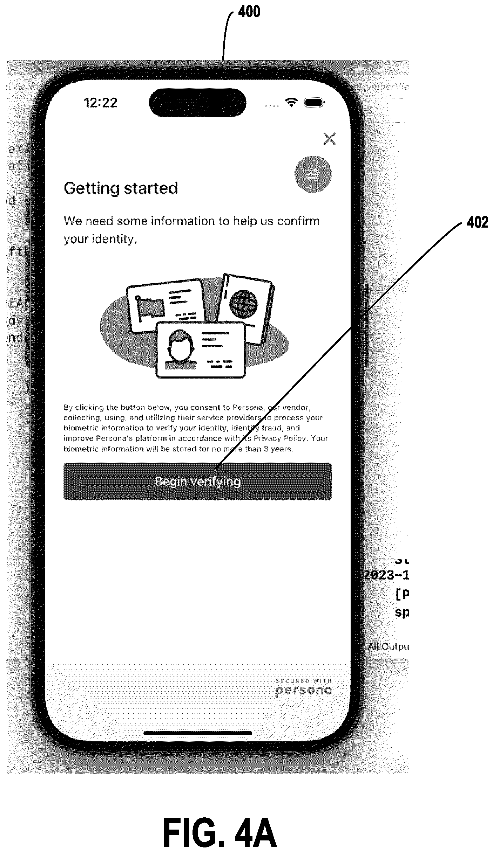

Figure 4A is a screenshot of a user interface for an account creation process that may be displayed on a client device 400. Client device 400 may be one of the client devices described in the context of Figure 3. For example, client device 400 could be a mobile phone of a requester or responder.

The user interface may include introductory information about the service, such as a welcome message, textual instructions, or graphics. Additionally, the user interface may include interactive features, such as button 402, associated with the account creation process. The user interface could also display information about or links to the privacy policies or other legal information related to use of the service (e.g., an end-user license agreement). The screenshot of Figure 4A is meant as an example; thus, additional screens and/or user interfaces may be present in the embodiments herein even if not shown in the drawings. In addition, the application operating on the client device may allow a user with an existing account to associate that account with their client device.

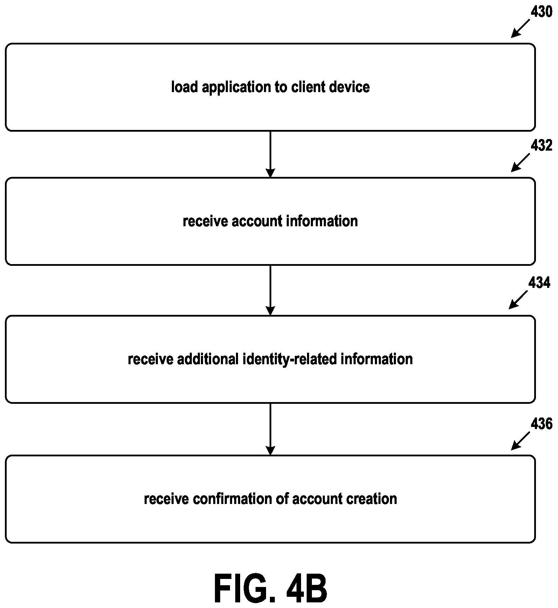

Figure 4B is a flow chart of an account creation process that may take place on a client device (e.g., one of the client devices of Figure 3). The client device may be a user-facing device, in that a user is prompted to enter information into a user interface not unlike the one described in the context of Figure 4A. However, other possibilities exist.

At block 430, an application is loaded to the client device. For example, this may involve a user downloading a mobile application ("app") from an application store, or side loading the application onto the client device by way of a wired or wireless interface. In other situations, the application may be preloaded on the client device (e.g., by a manufacturer). In some cases, the registration process may take place - at least in part - by way of a web-based interface instead of on such an application. In some embodiments, a user may access the service through an integration with a third-party app. For instance, integration with the service herein may be included in social media apps, dating apps, ride-share (or other transit or transportation) apps, or other apps.

At block 432, account information may be received by the client device (e.g., by way of the application and/or web-based interface). This account information may be a username, password, date of birth or age, email address, postal address, mobile phone number, affiliation (e.g., school, college, university, or some other institution), a photo of a user (e.g., a headshot clearly showing the user's face, such as a "selfie"), and/or possibly other biometric or identifying information.

At block 434, additional identity-related information may be received by the client device. This could include one or more of government identity information (e.g., a social security number, driver's license number, or other government-issued identifier). In some cases, the operations of blocks 432 and 434 may be combined in various ways or be broken up into further steps.

At block 436, account creation is confirmed. In some cases, this may require that the user respond to a text message or email message, perhaps by entering a code from a text message or email message into the client device. Even though the account may be created, it might not be available for use until the user's identity is confirmed, e.g., by a third-party service. Thus, there may be a delay of minutes, hours, or even days between account creation and when the account is ready for use. The client device may display a confirmation of the account creation, for example by creating a graphical display element in the application or sending the user a text message or email message indicating that the account has been created.

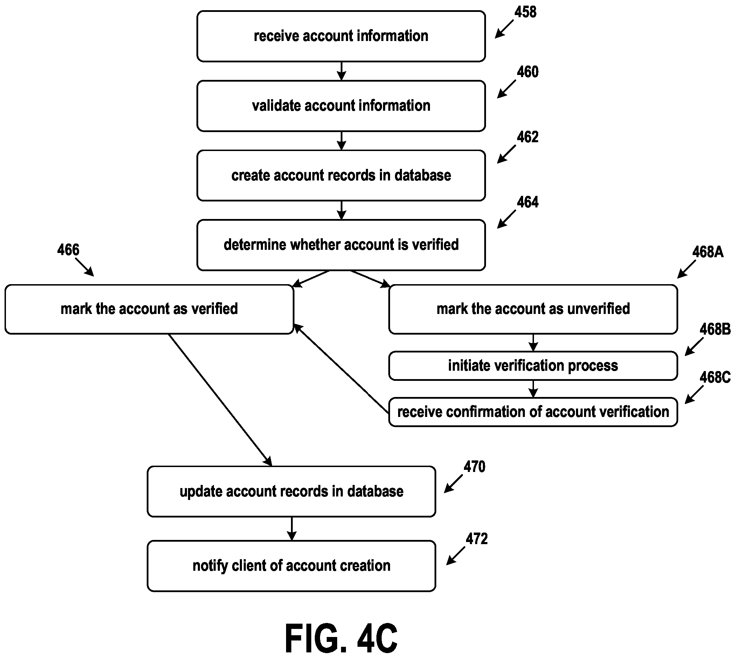

Figure 4C is a flow chart of an account creation process that may take place on a server device (e.g., server device 304 of Figure 3). This may be part of the same account creation process discussed in the context of Figure 4B.

At block 458, the server device may receive account information from a client device. For example, this may involve receipt of a notification, e.g., from the client device, that the application has been downloaded to the client device. This may also include information about the client device, for example, the make and model of the client device. Additionally or alternatively, this may involve receiving any of the information provided to the client device in block 432 of Figure 4B (e.g., username, password, date of birth or age, email address, postal address, mobile phone number, affiliation, a photo of a user, and/or possibly other biometric or identifying information). These operations may take place across one or more substeps within block 458, and these sub-steps may occur at different points throughout the other blocks depicted in Figure 4C. For example, the server device may receive the information from the client device in one or more messages.

At block 460, the server device may validate the account information. For example, the server device may verify that received account information is correctly formatted, does not include any clear typographical errors, and/or that all required information is received. If the server device determines that information is invalid and/or missing, the server device may transmit a notification to the client device. The operations of block 460 may take place one or more times as additional information is received by the server device.

At block 462, the server device may create account records in a database, such as database 306 described in the context of Figure 3. The account records could be one or more records, and these records could be changed or modified throughout the process of Figure 4C. The records may include the account information received directly (e.g. name, age, affiliation), information about the client device, such as a unique identifier for the client device, and/or other information determined by the server device. The account records could be a new entry with various associated fields representing specific attributes or pieces of information for the account; for example, there could be fields for the username, password, date of birth or age, or any of the other information received by the server device. If the database is a relational database, the data may be stored in a table where each account record is a row, and each field is a column. Additionally or alternatively, if the database is a NoSQL database, such as MongoDB, account records may be stored as flexible JSON-like documents, with different fields corresponding to received account information.

The fields of the account records and/or their entries in the database may be pre-set by service for all clients, or they may depend on user inputs and/or client device information. The account records may also depend on received information indicating the user's preferences, for example, whether the user would like to receive text notifications, email notifications, in-application notifications, or some combination thereof. The account records may include account configuration information that could be determined by the server device, such as various category labels on the account. For example, if information is received that indicates the affiliation of a user as being part of a college or university, the account records may include a categorization of the user as a college affiliate.

The fields of the account records may or may not be filled during the steps of block 462 and/or could continue to be filled throughout the account creation process. In some cases, the operations of block 462 may be broken up into further steps.

At block 464, the server device may determine whether the account is verified, i.e. that the identity or authenticity of the account user has been confirmed. This may be used, for example, to establish that a particular account is associated with a real user and/or that the user has provided authentic information related to the account. Thus, there may or may not be a field in the account records indicating whether the account is verified.

If the account is determined to be verified, the server device may mark the account as verified, as shown in block 466. This could include updating the account records for the account, for example by marking a "Y" entry in a field corresponding to account verification. If the account is not determined to be verified, the server device may mark the account as unverified, as shown in block 468A. This may include updating the account records for the account, for example by marking an "N" entry in a field corresponding to account verification. As another example, the server device could use "True" to mark an account as verified, and "False" to mark an account as unverified. Other Boolean-like or non-Boolean values are possible.

At block 468B, given that the account is marked as unverified, the server device may initiate a verification process. This may occur on the server device, or may take place at least in part on a different computing device. The verification process may require further information from the client device, and/or that provided information undergo a validation process. For example, the server device may check the enrollment and/or employment records of a college or university to determine if the user of the account affiliated with the institution. As another example, the server device may require a document showing proof of residency, for example by receiving an image of a bank statement or bill. Additionally or alternatively, the server device may use a third-party service to run a background check on the user. Such background checks or identify verification steps could examine a user's personal, financial, and professional history, as well as criminal history and/or credit reports for payment histories and outstanding debts.

The identity verification steps for the account may be dynamically based on client input (e.g. their age or affiliation) and/or based on pre-configured steps. For example, information received about an account indicating that the user is affiliated with an educational institution may be required to have received verification of identity through the receipt of an institution-issued ID, whereas other types of accounts may be required to have received verification of identity through the receipt of a government ID.

At block 468C, the server device may receive confirmation of account verification, which may be determined by the server device or received from a different computing device (e.g. a third-party background check). There may be a delay between the identity verification process of blocks 468A, 468B, and 468C. Such a delay could occur for several reasons. For example, users may require additional time to provide the required information. As another example, external verification steps, such as the checking of enrollment or employment records, may require additional time. Additionally, the server device may need time to process all the received information from the client device and/or external sources.

If the server device receives confirmation of account verification, it may mark the account as verified, as shown in block 466. This may involve updating the account records in the database, as discussed above, including, for example, marking the field corresponding to account verification from "N" to "Y".

At block 470, the server device may update account records of a verified user in the database based on additional received information from the user's client device, from the server device itself, and/or from an external source. For example, if the user provides additional information to the client device that is then received by the server device.

At block 472, the server device may transmit an indication to the client device indicating that the account has been created. This, in turn, may cause the client device to display a notification confirming account creation and/or update the account state of the application.

### C. Check-In Mode

The service may include a "check-in" mode, where the requester device (i.e., the client device of the user using check-in mode) is notified ("pinged") at some, pre-determined interval or intervals, and the user of the requester device ("requester") may be prompted to respond to the notifications ("pings"). Failure to receive a positive response to the pings, and/or a failure of the response to comply with pre-determined requirements may cause the service to enter a "search" mode in relation to the requester device. In search mode, the service attempts to locate responders to assist the requester.

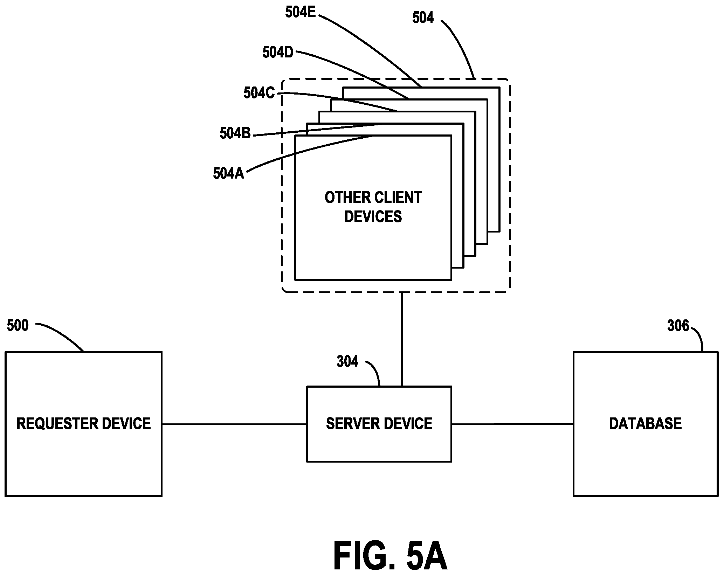

Figure 5A is a schematic representation of a possible service architecture operating in check-in mode. The example architecture depicts requester device 500, other client devices 504 including other client device 504A, 504B, 504C, 504D, and 504E, as well as server device 304 and database 306. Even though one requester device is shown in Figure 5A, there could be more or fewer requester devices in various embodiments. Similarly, even though five other client devices are shown in Figure 5A, there could be more or fewer other client devices in various embodiments. Some embodiments contemplate hundreds or thousands of such devices.

The requester device and other client devices, for example requester device 500, could be a mobile phone, tablet, smart watch, personal computer, wearable computing device, or some other type of client device. They could all be of the same type (e.g., all mobile phones), or they may be of multiple types.

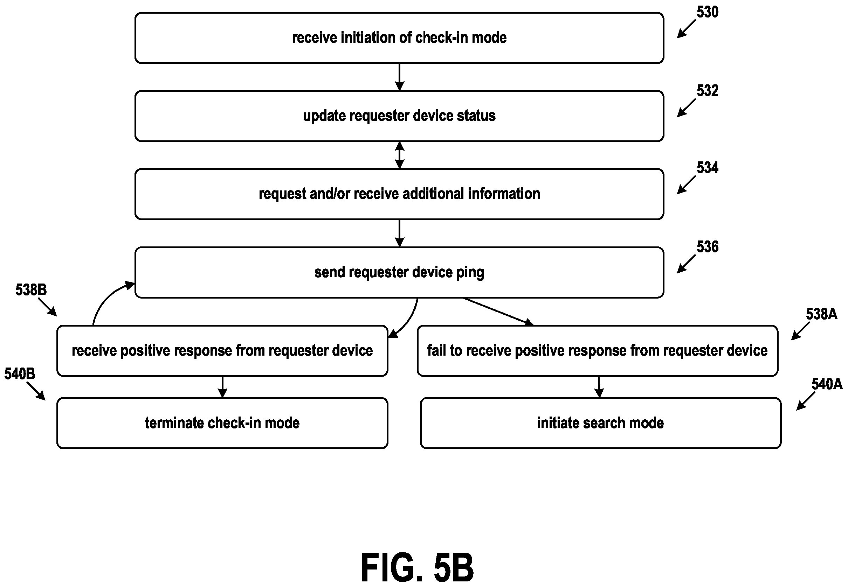

Figure 5B is a flow chart of the check-in mode of the service that may take place on a server device (e.g., server device 304 of Figure 3).

At block 530, the server device may receive an initiation of check-in mode. This could come from a client device, the server device, or some other computing device. For example, this may involve receipt of a notification, e.g., from the client device, that the user of the client device has requested to start check-in mode. The requester might request to begin check-in mode on a client device for a variety of reasons, for example if they are going on a run, or if they are departing their building. Additionally or alternatively, the server device may initiate check-in mode according to a pre-configured automation sequence, for example if the server device receives information that location of a client device is outside of a pre-defined radius of a provided home address. This could involve geolocation services by the server device, and/or the use of preprogrammed activation, for e.g., if the user leaves for work every day at the same time and wants check-in mode enabled on their commute.

At block 532, the server device may update the status of the requester device to indicate that the requester device is operating in check-in mode. This could include marking the requester device as a requester device 500, as suggested in Figure 5A, and/or updating the account records for the account associated with a requester device. The server device may perform some checks before updating the requester device status, for example ensuring that the server device is able to operate in check-in mode.

At block 534, the server device may request and/or receive additional information. This request and/or receipt could be to/from the requester device, a database, and/or a different computing device. The server device may require additional information before commencing check-in mode, for example, that additional parameters be received (such as how frequently the check-in pings should be sent or the time allowed a positive response to be received). Additionally or alternatively, the additional information could include data related to what the service does if a positive response is not received (e.g., whom to contact/alert), how long the requester device is going to be in check-in mode, or various other configuration settings. In example embodiments, the client device (perhaps following a command from the server device) may prompt the user take and upload a photo and input intended duration of the check-in mode and/or final destination. Some of these may require additional receipt of information from the requester device, whereas others may not.

Thus, there may be delays between the steps of block 530, 532, and 534. Additionally, these operations may take place across one or more substeps within blocks 532 and 534, and these sub-steps may occur at different points throughout the other blocks depicted in Figure 5B. For example, the server device may send one or more requests for additional information from the requester device, and may receive the additional information in one or more messages.

At block 536, the server device may send the requester device a ping. The ping could be a text message, an email message, and a text-based or graphical prompt on an application, a phone call, or some other notification. The ping could be a template notification, or it could include additional, possibly customizable features, such as a message or information about the last ping sent. Additionally, the server device may have received information about the frequency at which to send pings to the requester device, or may have some pre-configured frequency associated with a given requester account. Other possibilities exist. The requester device may prompt the requester to provide some form of positive response, such as responding with a text or email message, tapping a button on a graphical interface, or answering a phone call. This positive response may have an associated requirements, for example, that a positive response be received within some time frame (e.g., 1 minute, 2 minutes, 5 minutes, etc.), or that the positive response include some features (e.g., a text message containing certain phrases).

At block 538A, the server device may fail to receive a positive response from the requester device, and/or the response received may not comply with the requirement associated with it (e.g., a failure to receive a response within a timeframe, or a failure to include certain phrases). The server device may then initiate a second mode of operating, the search mode, as depicted in block 540A. The requester device may be notified that the search mode has begun, and may be able to cancel the initiation of the search mode. Additionally or alternatively, before the search mode begins, the server device may prompt the requester device to display a countdown indicating to the requester that search mode is about to begin.

At block 538B, the server device may receive a positive response from the requester device. The server device may then send out another ping at the next time interval, as shown in block 536. This cycle between the operations of blocks 536 and 538B may repeat until the server device terminates check-in mode, as depicted at block 540B. This termination may occur because the server device receives a request to end check-in mode from a requester device, or because the server device makes some determination based on pre-configured settings (e.g. if the requester device is determined to be located back inside a designated home address, or because of some pre-set time expiration). In some cases, terminating check-in mode requires that the requester enter a password, or use some form of biometric identity confirmation (e.g., a fingerprint or facial scan). Other possibilities exist.

### D. Search Mode

The service may include a "search" mode, where the requester device is identified as requesting a response, and the server device is maintaining a queue of other client devices of users that could provide a response ("potential responder devices") with associated users ("potential responders") and a queue of client devices that are actively being requested to provide a response and/or are providing a response ("active responder devices") with associated users ("active responders").

In some embodiments, the potential responders may be human users, but could also include non-human responders, such as robots or unmanned aerial devices such as drones. For instance, in response to a request (automated or user-prompted) from a requester device, one or more non-human responders may be summoned to the location of the requester device in order to capture surveillance footage of the site of an incident. Such non-human responders may be located at a central location such as a warehouse, and be sent to a requester device's location. Once there, the non-human responders may capture surveillance footage and execute further actions based on the captured footage. For example, a non-human responder may activate an alert (e.g., a flashing light or siren) to disrupt an incident.

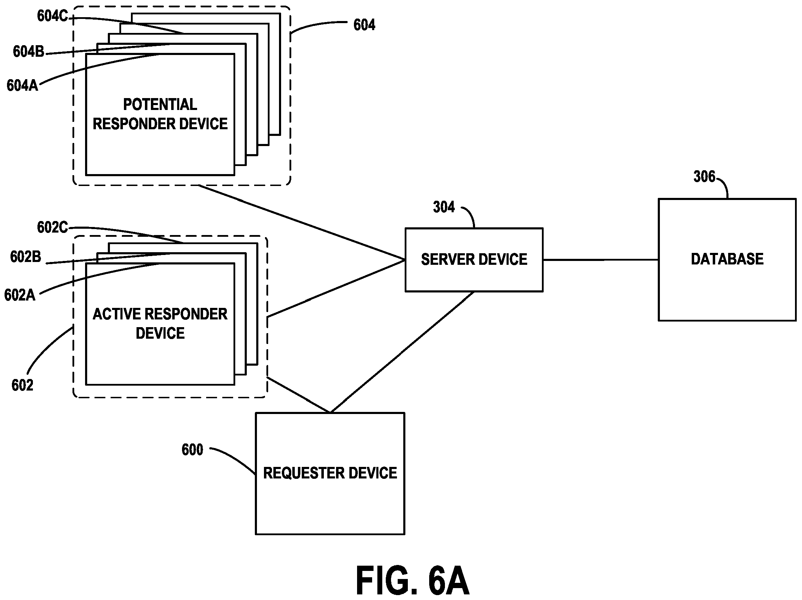

Figure 6A is a schematic representation of a possible service architecture operating in search mode. The example architecture depicts requester device 600, active responder devices 602, including active responder device 602A, 602B, and 602C, potential responder devices 604, including potential responder device 604A, 604B, and 604C, as well as server device 304 and database 306. Even though one requester device is shown in Figure 6A, there could be more or fewer requester devices in various embodiments. Similarly, even though three active responder devices are shown in Figure 6A, there could be more or fewer active responder devices in various embodiments. Likewise, even though three potential responder devices are labeled in Figure 6A, there could be more or fewer potential responder devices in various embodiments. Some embodiments contemplate hundreds or thousands of such devices.

The requester device, active responder devices, and potential responder devices ("the client devices"), for example requester device 600, could be a mobile phone, tablet, smart watch, personal computer, wearable computing device, or some other type of client device. The client devices could all be of the same type (e.g., all mobile phones), or they may be of multiple types. Additionally, the requester device 600 may be based on requester device 500 described in the context of Figure 5A, and the active responder devices 602 and/or the potential responder devices 604 may be based on the other client devices 504 described in the context of Figure 5A.

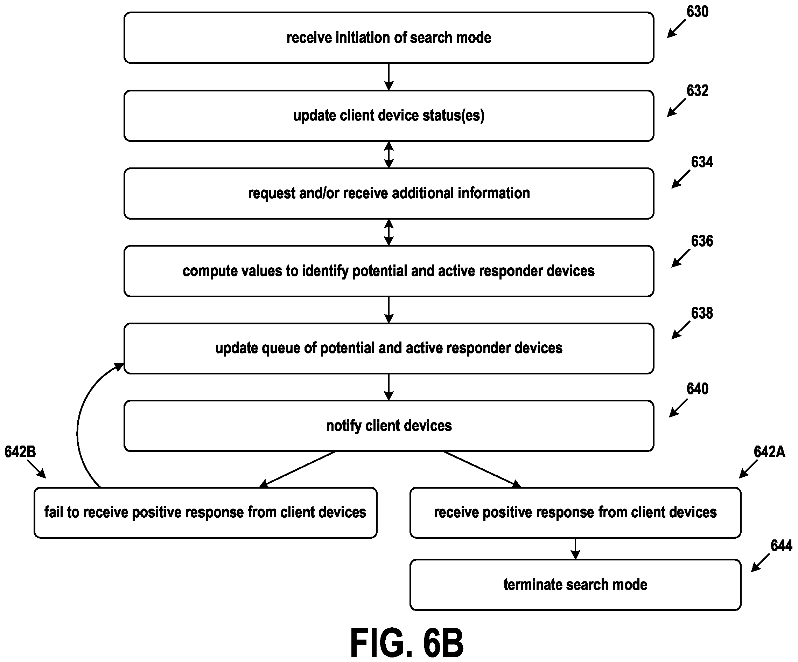

Figure 6B is a flow chart of the search mode of the service that may take place on a server device (e.g., server device 304 of Figure 3).

At block 630, the server device may receive an initiation of a search mode. This initiation could be received from a client device, from within the server device, or from a different computing device. For example, the requester may begin check-in mode and fail to respond positively to a check-in within the specified period, as described above. Additionally or alternatively, the service may begin the search algorithm because of receiving a request for a search mode to begin directly from a client device. As another possibility, the server may initiate a search mode based on external information (e.g., if a third party alerts the server that a user needs a response). In some example embodiments, a known contact of the requester (such as a friend or family member) may initiate a search mode on behalf of the requester, which could include live location tracking of the requester by the known contact and/or notifications to the known contact to/from the requester and/or to/from the server device before or after a search more is initiated. Other options are possible.

At block 632, the server device may update the status of various client devices. For example, the server device may update the status of the requester device to indicate that the requester device is in search mode. This could include marking the requester device as a requester device 600, as suggested in Figure 6A, and/or updating the account records for the account associated with a requester device. The server device may perform some checks before updating the requester device status, for example ensuring that the server device is able to operate in search mode.

At block 634, the server device may request and/or receive additional information. This request and/or receipt could be to/from different client devices and/or to/from a database and/or to/from a different computing device. The server device may require additional information before commencing search mode. For example, the server device may require that the requester device send a location update. As another example, the server may request information from the database about the locations of other client devices. As yet another example, the server may request information from other client devices about the availability of responders to respond in the search operations. Some of these may require additional receipt of information form the client devices, whereas others may not.

At block 636, the server device may compute values to identify potential responder devices and active responder devices. Potential responder devices and active responder devices may include client devices for users of the service. Potential responder devices may encompass all client devices that could be determined as being able to provide a response to the requester device, while active responder devices may encompass the potential responder devices whose users are actively requested to respond and/or whose users are actively responding.

In computing the values, the server device may request and/or receive additional information from various client devices, a database, and/or other computing devices. Thus, the operations of blocks 632, 634, and 636 may occur repeatedly and in any order. The operations could also take place across one or more substeps within blocks 632, 634, and 636, and these sub-steps may occur at different points throughout the other blocks depicted in Figure 6B. For example, the server device may send one or more requests for additional information from the client devices, and may receive the additional information in one or more messages. Thus, there may be delays between the steps of blocks 630, 632, 634, and 636 due to processing time on the server device and/or delays in receiving additional information.

At block 638, after computing values for potential responder devices in the database, the server device may create a queue of potential responder devices and active responder devices based on the computed values. For example, a potential responder device that is very close to the requester device and whose location was recently updated may be higher in the queue the potential responder device who is further away. The potential responder device queue may include all potential responder devices, while the active responder devices queue may be a subset of those responder devices. In some embodiments, the active responder devices queue may be those potential responder devices with higher values. Some example embodiments may consider an active responder device queue with two or four active responder devices.

At block 640, once the responder device queues are established, the server device may send notifications to active responder devices in the active responder device queue with information about the request for response from the requester device. The notifications may take various forms, such as text messages, in-application alerts, or even automated phone calls. The urgency and nature of the emergency may determine (at least in part) the communication method. The server device may send notifications to active responder devices by ranking potential responders based on their respective values and proceeding from highest to lowest score. Additionally or alternatively, the server device may rank the potential responders and then only notify those about a certain threshold value, for example highest to lowest, or randomly.

Active responder devices in the active responder queue device may be provided with relevant details about the situation, including the location of the requester device. This may also include additional context about the requester, such as a name, a photo (including, for e.g., a photo received during account creation and/or a more recent photo), the requester's intended destination, how long the requester has had an account with the service, whether they share contacts or group affiliations with the requester, and/or how many times the requester has provided assistance to other users of the service. Additionally or alternatively, the server device may also send notifications to the requester device to provide updates on the status of their request for response.

The notified active responders may have the option to accept or decline the request for response. The server device may remove the notified active responder device from the queue of active responder devices and update the queue accordingly, as shown in block 638 in any of the following situations, as shown at block 642B: (i) the notified active responder device declines the request for response, (ii) the notified active responder device does not respond within some specified timeframe, and/or (iii) the notified active responder device accepts the request for response but the server device does not receive information indicating that the active responder is providing response.

Other reasons for removing an active responder device from the queue of active responders may exist. If an active responder device is removed from the queue of active responder devices, the server device may select the next-highest valued potential responder device to become an active responder device that may then be notified, as shown at blocks 638 and 640. Additionally or alternatively, the server device may maintain a queue of responders who have been removed from the potential and/or active responder queue ("come-back responders") (e.g., because they did not respond to the initial request quickly enough), and may reinsert the come-back responders into the potential and/or active responder queues, for example if they belatedly accept the request to become an active responder.

If the active responder does choose to respond, the active responder may be prompted to take a variety of potential actions. This might involve the server device sending the active responder device a prompt of choices. In some example embodiments, the choices may include calling a governmental or private emergency responder service (e.g., 911 or campus security), moving to a location nearby the responder and making a video or audio recording of the user of the requester (e.g., filming a robbery on a cell phone), or physically interacting with the requester and/or intervening in their situation.

Additionally or alternatively, the server device may prompt the requester device and the active responder device to communicate with each other. For example, the server device may provide the active responder device with contact information for the requester device, and prompt the active requester to chat or call with the responder. This communication could be encrypted. As another example, the responder device could be provided with live location updates of the active responder device to track response progress. Other options may be possible. To facilitate this process, the server device may cause a responder client device to display a map that indicates the locations of the requester device and the active responder device, as well as a path with a recommended or shortest travel distance therebetween.

At block 642A, the server device may receive information about the active responders and/or the active responder devices that verify the active responder are taking actions to respond. For example, the server may ensure that active responders who indicate they are calling 911 are actually calling 911 by taking a screen recording of their device. In additional examples, the server may track the active responder device locations to see if they are approaching the requester device. In additional examples, active responders may need to indicate via the application that they have helped the requester. Additionally, the server may wait for a certain amount of time for the group of active responders to respond positively, and if they fail to do so, may proceed with the operations of blocks 642B.

At block 644, if certain conditions are met, the server device may terminate the search mode. In some examples, this might include at least one confirmed 911 call made by an active responder device and one confirmed physical visit. Additionally or alternatively, the user who initiated the search mode may be able to terminate the search manually. The system may also stop if no more potential responders are available. Other options may exist.

One possible example of how the server device might implement the potential and/or active responder queues is by maintaining an "everyone" queue (used to track all potential responders), a "helper" queue (used to track responders from the everyone queue who have been sent a request to provide assistance), a "wait" queue (used to track active responders who have accepted the request but have not been confirmed to be providing assistance), and a "confirmed" queue (used to track the active responders who are providing assistance). In some embodiments, confirmation may occur when, after an active responder indicates they are placing a call to emergency services, the server device verifies that they have placed a call. Confirmation may also occur when, after an active responder indicates they will physically assist the requester, the server device verifies they are moving closer to the requester. Additionally, confirmation may include prompting active responders to take a video of the requester, which may be transmitted to the server device.

As another possible example, the server device might also maintain a "come back" queue (to the track the responders who are not engaged in the response but might be reinserted into the potential and/or active responder queue at a later time), and/or a "called" queue (to track the responders to have indicated that they made a 911 or other emergency services call.

### E. Value Computation

The service aims to allocate responses efficiently and effectively to the requester by leveraging proximity and availability of other users. As such, the service computes values to generate queues of potential responder devices as aligned with this aim by ranking the users determined as potentially better able to provide an effective response above those determined as potentially less able to provide an effective response.

Specifically, to compute the values used in generating the queue of potential responder devices and active responder devices, the server device may consider various factors, such as physical and/or geographic distance between the requester device and the potential responder device, the recentness of location updates from the requester and/or responders devices, any possible affiliations (e.g., if the requester is a college affiliate, the value computation may weight other college affiliates as potentially better responders than non-affiliated community members), whether the requester has blocked any other users, whether the potential responders are engaged in responding to a different responder, or other metrics.

Below is an example table of potential factors the value computation could take into account. The table is meant as an example; thus, these and/or other factors may be included or excluded in the embodiments herein. Each of the factors in the table is discussed in greater detail below.

| **Factor** | **Description** |
|---|---|
| Distance | Distance between potential responder device and requester device, computed, for example, with Manhattan distance, Euclidean distance, Haversine distance, H3 distance, or some other distance computation, with closer potential responder devices valued higher. |
| Recentness | Temporal recentness of location update for potential responder device, with more recently updated potential responder devices valued higher. |
| Class | Matching and/or comparing affiliation(s) of potential responder and requester, for e.g., if both are affiliated with a college/university, or if both are in each other's contact list. Potential responder devices with closer matches are valued higher. |
| Successful Past Responses | If potential responder has responded positively to other requesters, may value that potential responder device higher. |
| Blocked | If potential responder device and/or requester device have blocked each other. Blocked potential responder devices |
| | are valued lower. |
| Engaged | If potential responder device is an active responder device in another request. Engaged potential responder devices are valued lower. |

The distance may be the distance between the last known locations of the potential responder devices and the requester device. The distance computation may be performed using, for example, Manhattan distance, Euclidean distance, or a simplified Haversine formula on, for example, the latitude and longitude coordinates. The server device may value closer potential responder devices higher than further potential responder devices. This could be done with bucketed values (e.g., users less than one mile away all receive the same value, users one to two mile all receive another value, etc.), with a linear mapping of distance to value, with a distance ranking to value conversion, or some other metric. Additionally, the server device may prompt the potential responder devices to update their locations before computing values.

In some embodiments, the server device may not place a potential responder device into a queue if the computed distance between the potential responder device and the requester device is below a threshold value. For example, the server device may exclude from the queue potential responder devices that are within 20 feet of the requester device. In some embodiments, this distance may be 10 feet, 25 feet, 50 feet, or 100 feet. Other distances are possible. This may prevent an attacker's device from inadvertently being added to a queue. In situations involving multiple assailants, the chance of this may be heightened, and thus the server device may purposely elevate potential responder devices that are farther away from the requester device if the distance between some potential responder devices and the requester device is too short. This may also occur if a threshold number of potential responder devices are determined to be too close to the requester device. Another advantage of this approach is that it allows the server device to select potential responders that are different distances (radii) from the requester device, which may improve the variety and diversity of potential responders.

The recentness may be the timestamp of the location update for the potential responder device and/or the requestor device, with more recent updates being valued higher. As above, the timestamp to value determination could be done through a bucketed mapping (e.g., all timestamps updated less than 30 minutes ago receive the same value), through a linear mapping, through a ranking to value conversion, or by some other metric.

The class may include checking account records to see if a potential responder has provided some group affiliation (e.g. college/university, workplace, etc.) and if that group affiliation matches some affiliation of the requester. The affiliations may also include determinations made by the server device, such as whether or not the potential responder has consented to and passed a background check and/or other security measures. Additionally or alternatively, this may include checking to see if potential responders are in the contacts list or on some "trusted responder" list of the requester. For example, the server may prefer a favorited contact of a requester as higher than another user who does appear in the contact list of the requester. This scoring could be, for example, a binary mapping indicating if affiliations or contacts are shared. As another example, this may include checking as to whether potential responders are friends and/or followers on a social networking site or social media app. This may indicate whether they are a "trusted responder."

The successful past responses may include checking whether a potential responder has successfully provided an effective response to a requester in the past. This might suggest that said potential responder is able to provide an effective response to the requester in need of a response.

The blocked factor may consider whether the requester has blocked a potential requester (or visa-versa), and may penalize any blocked potential responder devices when scoring. In some example embodiments, a blocked potential requester device may be removed from the queue of potential requester devices.

The engaged factor may examine if a potential responder device is actively responding to a different requester, in which case they might not be able to provide an effective response to the requester at hand. In some example embodiments, an engaged potential requester device may be removed from the queue of potential requester devices. The engaged factor may also determine the activity (and/or activity schedule) of a potential responder device. This may be done to determine whether the user of the potential responder device is willing and/or available to respond. For instance, if a device is only used sporadically or is not used during certain hours of the day, it may be may be removed from the queue of potential requester devices.

In computing the overall value, the server device may weight the various factors to yield an overall value for ranking potential responder devices and generating the queue. For example, the distance factor could account for 25%, 50%, or 75% of the total value. These weights may be set according to some pre-determined configuration, or as determined by user input. Other options are possible.

Additionally, the value computation may employ parallel threads on the server for each of the potential responders in the database. In some example embodiments, there may be more than 50,000 potential responders and there may be one thread per potential responder. In other embodiments, there may be n responders and some lesser number of threads, t<n. Then, the system may calculate t values in parallel until all n values are calculated. Adding some level of parallelism in this fashion may increase performance by lowering the time needed to determine values.

Other optimizations are possible, for example, the server device may partition areas and/or geographically segment the population to increase value computation efficiency. In some examples, this may include using H3 hexagons, a spatial indexing system to facilitate more efficient geographical analysis by partitioning at least part of the Earth's surface into hexagonal cells with unique identifiers. For example, this may be used to more efficiently search sub-regions for communities over a certain size. Additionally or alternatively, batch processing may enhance efficiency in large-scale searches.

### III. Example Technical Improvements

These embodiments provide a technical solution to a technical problem. One technical problem being solved is the inadequacy of current emergency response systems in utilizing proximity-based locations. In practice, this is problematic because existing systems, while providing an emergency response, often lack the capability to leverage the power of nearby individuals in emergencies.

In the prior art, conventional emergency response systems rely on location-based services that may not effectively harness the proximity of nearby individuals. Particularly, these techniques do not offer a mechanism for integrating vetted and proximal individuals into the emergency response process, leading to potential delays and limitations in responding. Moreover, the prior art relies on subjective decisions and experiences of emergency responders or the distressed individuals, which may result in suboptimal outcomes due to a lack of real-time, proximity-based collaboration. Thus, prior art techniques did little if anything to address the untapped potential of utilizing vetted responders (often strangers to the requester) in the requester's vicinity during emergencies.

The embodiments herein overcome these limitations by introducing a dynamic proximity-based emergency response algorithm that incorporates the locations of nearby, vetted individuals in real-time. This results in several advantages. First, swift and localized responses can be provided by nearby individuals, potentially reducing response times and increasing the chances of successful interventions. Second, tourists, immigrants, or individuals in unfamiliar locations can benefit from the proximity of vetted individuals when traditional emergency contacts are geographically restricted. Third, the service reduces the reliance on subjective decisions alone, fostering a collaborative and proximity-based approach to emergency response.

Another technical problem being solved is the inefficiency of current emergency response systems in algorithmically ranking and queuing potential responders based on various metrics. In practice, this is problematic because existing systems, while providing an emergency response, often lack a robust algorithmic approach to dynamically prioritize and queue proximal responders during emergencies.

The embodiments herein overcome these limitations by implementing a scoring and queuing system that evaluates potential and active responders based on factors such as proximity, ability to respond, and ongoing interactions, such as whether the responder client device is taking action. In this manner, the system helps ensure that suitable individuals are prioritized and efficiently queued, improving the effectiveness of the emergency response process. This results in several advantages. First, emergency situations receive responses from the qualified and nearby individuals, potentially reducing overall response times and enhancing the quality of support. Second, the algorithmic approach reduces the reliance on subjective decisions alone, providing a standardized and optimized framework for emergency response. Third, users in distress benefit from a more tailored and efficient allocation of responses.

Other technical improvements may also flow from these embodiments, and other technical problems may be solved. Thus, this statement of technical improvements is not limiting and instead constitutes examples of advantages that can be realized from the embodiments.

### IV. Example Operations

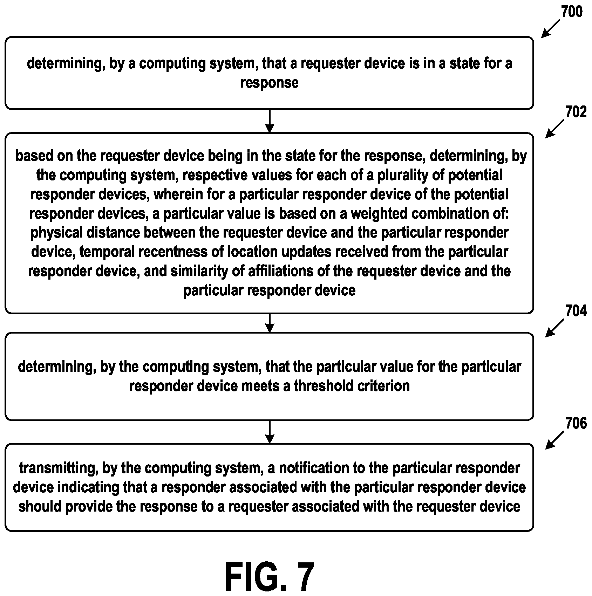

Figure 7 is a flow chart illustrating an example embodiment. The process illustrated by Figure 7 may be carried out by a computing device, such as computing device 100, and/or a cluster of computing devices, such as server cluster 200. However, the process can be carried out by other types of devices or device subsystems. For example, the process could be carried out by a portable computer, such as a laptop or a tablet device.

The embodiments of Figure 7 may be simplified by the removal of any one or more of the features shown therein. Further, these embodiments may be combined with features, aspects, and/or implementations of any of the previous figures or otherwise described herein.

At block 700, a computer-implemented method may comprise determining, by a computing system, that a requester device is in a state for a response. The state may be pre-defined in that it specifies a set of criteria indicating that the requester associated with the requester device may benefit from the response.

At block 702, the method may comprise, based on the requester device being in the state for the response, determining, by the computing system, respective values for each of a plurality of potential responder devices, wherein for a particular responder device of the potential responder devices, a particular value is based on a weighted combination of: physical distance between the requester device and the particular responder device, temporal recentness of location updates received from the particular responder device, and similarity of affiliations of the requester device and the particular responder device.

In some embodiments, determining the respective values for each of the plurality of potential responder devices may involve determining whether a physical distance between the requester device and the particular responder device exceeds a threshold value.

At block 704, the method may comprise, determining, by the computing system, that the particular value for the particular responder device meets a threshold criterion.

At block 706, the method may comprise, transmitting, by the computing system, a notification to the particular responder device indicating that a responder associated with the particular responder device should provide the response to a requester associated with the requester device.

In some embodiments, pre-defined state of block 700 may indicate that the requester device has failed to respond to one or more notifications from the computing system or from a client application executing on the requester device. Additionally or alternatively, the pre-defined state of block 700 may indicate that the computing system has received a request for the response from the requester device or another device.

In some embodiments, the particular value of block 702 may include a factor that is inversely proportional to the physical distance between the requester device and the particular responder device. In other embodiments, the particular value may include a factor that is proportional to the temporal recentness of location updates received from the particular responder device. In some embodiments, the particular value includes a factor that is proportional to an availability determination of the particular responder device. In yet other embodiments, the particular value may include a factor that is proportional to the similarity of affiliations of the requester device and the particular responder device. Additionally or alternatively, the server device may store a representation of the affiliations of the requester device and the particular responder device, each indicating membership in one or more groups or organizations.

In some embodiments, the threshold criterion is that the particular value exceeds a threshold value. The operations of block 704 may comprise transmitting notifications to a set of potential responder devices with values above the threshold value. Additionally or alternatively, the particular value meeting the threshold value indicates that the particular value is one of a group of n highest threshold values, and transmitting the notification comprises transmitting notifications to a subset of potential responder devices with values in the group. In some embodiments, n may be between two and thirty. Other possible ranges for n include between two and four, two and ten, or two and twenty.

The operations of block 706 may further comprise determining, by the computing system, that the particular responder device has attempted to provide the response; updating, by the computing system, a status of the particular responder device to indicate that the particular responder device has attempted to provide the response; and providing to the particular responder device, by the computing system, a location of the requester device to the particular responder device. Additionally or alternatively, providing the location of the requester device to the particular responder device may comprise causing the particular responder device to display a representation of the location. Displaying the representation of the location may involve displaying a map indicating the location or displaying directions to the location. Alternatively or additionally, displaying the representation of the location may involve displaying the location with a name and photograph of the requester.

In some embodiments, the operations of Figure 7 may include registering, by the computing system, an account or indicator associated with the requester device and accounts or indicators associated with each of the plurality of potential responder devices.

In yet other embodiments, the operations of Figure 7 may include determining, by the computing system, that the particular responder device has not replied to the notification; determining, by the computing system, further respective values for each of a further plurality of further responder devices, wherein for a further responder device of the further responder devices, a further value is based on a further weighted combination of: physical distance between the requester device and the further responder device, temporal recentness of location updates received from the further responder device, and similarity of affiliations of the requester device and the further responder device; determining, by the computing system, that the further value for the further responder device meets the threshold criterion; and transmitting, by the computing system, a further notification to the further responder device indicating that a further responder associated with the further responder device should provide the response to the requester associated with the requester device.

### V. Closing

The present disclosure is not to be limited in terms of the particular embodiments described in this application, which are intended as illustrations of various aspects. Many modifications and variations can be made without departing from its scope, as will be apparent to those skilled in the art. Functionally equivalent methods and apparatuses within the scope of the disclosure, in addition to those described herein, will be apparent to those skilled in the art from the foregoing descriptions. Such modifications and variations are intended to fall within the scope of the appended claims.

The above detailed description describes various features and operations of the disclosed systems, devices, and methods with reference to the accompanying figures. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations.

With respect to any or all of the message flow diagrams, scenarios, and flow charts in the figures and as discussed herein, each step, block, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step or block that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of computer readable medium such as a storage device including RAM, a disk drive, a solid-state drive, or another storage medium.

The computer readable medium can also include non-transitory computer readable media such as non-transitory computer readable media that store data for short periods like register memory and processor cache. The non-transitory computer readable media can further include non-transitory computer readable media that store program code and/or data for longer periods. Thus, the non-transitory computer readable media may include secondary or persistent long-term storage, like ROM, optical or magnetic disks, solid-state drives, or compact disc read only memory (CD-ROM), for example. The non-transitory computer readable media can also be any other volatile or non-volatile storage systems. A non-transitory computer readable medium can be considered a computer readable storage medium, for example, or a tangible storage device.

Moreover, a step or block that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments could include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purpose of illustration and are not intended to be limiting, with the true scope being indicated by the following claims.

## Claims

1. A method comprising:
determining, by a computing system, that a requester device is in a state for a response;
based on the requester device being in the state for the response, determining, by the computing system, respective values for each of a plurality of potential responder devices, wherein for a particular responder device of the potential responder devices, a particular value is based on a weighted combination of: physical distance between the requester device and the particular responder device, temporal recentness of location updates received from the particular responder device, and similarity of affiliations of the requester device and the particular responder device;
determining, by the computing system, that the particular value for the particular responder device meets a threshold criterion; and
transmitting, by the computing system, a notification to the particular responder device indicating that a responder associated with the particular responder device should provide the response to a requester associated with the requester device.

2. The method of claim 1, wherein the state of the requester device indicates that the requester device has failed to respond to one or more notifications from the computing system or from a client application executing on the requester device; or wherein the state of the requester device indicates that the computing system has received a request for the response from the requester device or another device.

3. The method of any one of claims 1 or 2, wherein the particular value includes a factor that is inversely proportional to the physical distance between the requester device and the particular responder device; or wherein the particular value includes a factor that is proportional to the temporal recentness of location updates received from the particular responder device; or wherein the particular value includes a factor that is proportional to the similarity of affiliations of the requester device and the particular responder device.

4. The method of any one of claims 1-3, wherein the computing system stores a representation of the affiliations of the requester device and the particular responder device, each indicating membership in one or more groups or organizations.

5. The method of any one of claims 1-4, wherein the threshold criterion is that the particular value exceeds a threshold value, and wherein transmitting the notification comprises transmitting notifications to a set of potential responder devices with values above the threshold value.

6. The method of any one of claims 1-5, wherein the particular value meeting the threshold criterion indicates that the particular value is one of a group of n highest threshold values, and wherein transmitting the notification comprises transmitting notifications to at least a subset of potential responder devices with values in the group, and optionally wherein n is between two and thirty.

7. The method of any one of claims 1-6, further comprising:
determining, by the computing system, that the particular responder device has attempted to provide the response; and
updating, by the computing system, a status of the particular responder device to indicate that the particular responder device has attempted to provide the response.

8. The method of claim 7, further comprising:
providing to the particular responder device, by the computing system, at least one of a location of the requester device, audio data from the requester device, or video data from the requester device.

9. The method of any one of claims 1-8, further comprising:
prior to determining that the requester device is in the state for the response, registering, by the computing system, an account or indicator associated with the requester device and accounts or indicators associated with each of the plurality of potential responder devices.

10. The method of any one of claims 1-9, further comprising:
determining, by the computing system, that the particular responder device has not replied to the notification;
determining, by the computing system, further respective values for each of a further plurality of further responder devices, wherein for a further responder device of the further responder devices, a further value is based on a further weighted combination of: physical distance between the requester device and the further responder device, temporal recentness of location updates received from the further responder device, and similarity of affiliations of the requester device and the further responder device;
determining, by the computing system, that the further value for the further responder device meets the threshold criterion; and
transmitting, by the computing system, a further notification to the further responder device indicating that a further responder associated with the further responder device should provide the response to the requester associated with the requester device.

11. The method of any one of claims 1-10, wherein the particular value includes a factor that is proportional to an availability determination of the particular responder device.

12. The method of any one of claims 1-11, wherein determining the respective values for each of the plurality of potential responder devices comprises determining whether a physical distance between the requester device and the particular responder device exceeds a threshold value.

13. The method of any one of claims 1-12, wherein the particular responder device comprises a non-human responder, and wherein providing the response to the requester associated with the requester device involves directing the non-human responder to travel to a location of the requester device.

14. Computer program instructions, optionally stored on a non-transitory computer-readable medium, that, upon execution by a computing system, cause the computing system to perform operations according to any one of claims 1-13.

15. A computing system comprising:
one or more processors; and
memory, containing program instructions that, upon execution by the one or more processors, cause the computing system to perform operations according to any one of claims 1-13.
